# FASCICULE DE BREVET EUROPEEN

(11) **EP 2 040 875 B1**
(45) Date de publication et mention de la délivrance du brevet: **22.08.2012**
(21) Numéro de dépôt: 07803796.7
(22) Date de dépôt: 28.06.2007
(51) Int. Cl.: B23K 26/06, B23K 26/36

(54) **PROCÉDÉ ET DISPOSITIF D'USINAGE D'UNE CIBLE PAR FAISCEAU LASER FEMTOSECONDE**
VERFAHREN UND VORRICHTUNG ZUR BEARBEITUNG EINES ZIELS MIT FEMTOSEKUNDEN-LASERSTRAHL
METHOD AND DEVICE FOR MACHINING A TARGET USING A FEMTOSECOND LASER BEAM

(30) Priorité: 29.06.2006 FR 0605838
(43) Date de publication de la demande: 01.04.2009
(73) Titulaire: Ecole Polytechnique, 91128 Palaiseau Cedex (FR); Ecole Nationale Supérieure de Techniques Avancées, 75739 Paris (FR); Centre National de la Recherche Scientifique, 75794 Paris Cedex 16 (FR)
(72) Inventeur: MOUROU, Gérard, F-75014 Paris (FR); BOYER, Gilbert, F-13008 Marseille (FR)
(74) Mandataire: Pontet, Bernard
(86) Numéro de dépôt international: PCT/FR2007/001087
(87) Numéro de publication internationale: WO 2008/000961

(56) Documents cités:
- WO-A-03/028940
- DE-A1- 19 736 110
- US-A1- 2006 113 289
- US-B1- 6 259 055

## Description

La présente invention se rapporte à un procédé et un dispositif d'usinage d'une cible par faisceau laser femtoseconde. Elle trouve une application particulièrement intéressante dans le domaine des nanotechnologies. Mais elle peut aussi s'appliquer à d'autres domaines tels que la biotechnologie ou encore le domaine des bio-puces.

L'essor des lasers de puissance, commencé depuis plusieurs décennies a ouvert la voie à la découverte et à l'étude de multiples phénomènes physiques. Si on se limite aux interactions lumière-matière, les progrès retentissants dans le domaine de la multi-ionisation ont quelque peu occulté d'autres phénomènes tels que l'optique aux intensités critiques (OCI). Cependant ce régime qui concerne les changements de phase d'une cible sous l'effet d'un rayonnement intense et bref est caractérisé par un seuil de transition extrêmement bien défini et reproductible, ce qui en fait l'outil privilégié pour les nanotechnologies qui demandent une précision et une résolution spatiale toujours plus grande.

Une propriété récemment établie de l' OCI est que pour des impulsions laser d'une durée inférieure à 5 picosecondes, le seuil de dommages sur la cible devient déterministe et ce de façon très reproductible (à mieux que 1%), au contraire du comportement aléatoire (20-50%) qui est la caractéristique des ablations par impulsions laser de plus longue durée pour lesquelles ce seuil de dommages varie comme la racine carrée de la durée.

Des travaux précédents ayant promu l'hypothèse selon laquelle l'OCI serait induite par un phénomène d'ionisation multiple, ce qui impliquerai que le seuil de dommages diminue fortement avec la durée des impulsions laser, n'ont pu être confirmés par l'expérience, qui observe seulement une légère diminution de ce seuil, suivie par un palier si les impulsions deviennent encore plus brèves. Sur cette base d'observations, une autre interprétation a été avancée avec succès qui met en lumière le rôle prédominant de l'ionisation par effet tunnel (effet Zener) combinée avec l'ionisation par avalanche, elle-même induite par effet Zener.

Suivant cette interprétation, soutenue par des expériences mettant en jeu des impulsions laser couvrant une grande gamme de durées (lasers de type "chirp-pulse" en langue anglaise, ou CPA laser), le laser crée d'abord un plasma. Lorsque la fréquence de ce plasma se rapproche de celle du laser, le champ électrique subit une très forte amplification, ayant un effet cumulatif sur la génération de ce plasma qui ne prend fin que lorsque tous les électrons de valence de la cible sont ionisés. Quant la fréquence du plasma dépasse celle du laser, il devient absorbant ce qui provoque l'ablation. Des mesures par microscope à force atomique montrent que la profondeur de l'ablation est de l'ordre de l'épaisseur de "l'effet de peau", en accord avec cette interprétation. Cette théorie apporte une base solide à la nature déterministe du seuil d'ablation. Le processus a lieu même sur des matériaux diélectriques, qui deviennent opaques quant la densité d'électrons dépasse le seuil critique de dommage. Ce seuil est fortement non linéaire devant l'intensité. Non linéarité et déterminisme se combinent heureusement pour permettre l'usinage de motifs au-dessous de la limite imposée par la diffraction ("thresholding" en langue anglaise) dont la taille se situe dans la partie basse de l'échelle nanométrique, de 30 à 45 nm avec une très grande reproductibilité et une précision caractérisée par une netteté des contours de l'ablation inégalée. On connaît notamment le document US5656186 dans lequel on décrit un procédé permettant de réaliser des ablations reproductibles et de tailles plus petites que la longueur d'onde du faisceau laser, ce dernier étant pulsé et focalisé sur ou dans l'objet à traiter.

On connaît par ailleurs une technique de modification de la répartition de l'intensité lumineuse focalisée au moyen d'un filtrage spatial dans le plan focal arrière de l'objectif qui focalise le faisceau laser. Cette technique de remodelage de la figure de diffraction dans le plan focal, couramment appelée apodisation ("point-spread engineering" en langue anglaise) pour des raisons historiques (bien qu'en l'espèce une augmentation des "pieds" de diffraction est recherchée) présente des caractéristiques qu'il est utile de résumer ainsi :
- diminution, dans une proportion variable et dépendante du filtre apodisant, de la dimension transverse et/ou longitudinale du point lumineux focalisé ; on dit qu'il y a super résolution, c'est à dire focalisation au delà de la limite imposée par la diffraction,
- augmentation collatérale et malheureusement inévitable des maxima secondaires, qui vont former un système de un ou plusieurs anneaux brillants concentriques au point brillant central ; ces anneaux sont de hauteur variable suivant les caractéristiques du filtre,
- forte diminution de l'efficacité globale, puisque une part importante de l'intensité lumineuse est ainsi « transférée » vers les anneaux brillants et que le filtre apodisant présente lui-même une absorption.

Longtemps l'Apodisation est restée du domaine de la théorie et a suscité de vives controverses parce qu'elle semblait en oposition avec le principe d'incertitude d'Heisenberg. Aujourd'hui, l'Apodisation est couramment admise comme capable d'augmenter la résolution spatiale des microscopes, mais son application est fortement limitée à cause de la hauteur des lobes secondaires dans la figure de focalisation, ce qui la rend impropre à l'usinage par faisceau laser, puisque ces maxima peuvent générer sur la cible des empreintes indésirables.

La présente invention a pour but de remédier aux inconvénients précités en proposant un procédé d'usinage offrant une grande résolution. Un autre but de l'invention est la réalisation d'usinage de motifs de tailles bien inférieures à la longueur d'onde du faisceau laser. Un autre but de l'invention est la réalisation d'usinages de motifs de taille inférieure, toutes choses égales par ailleurs, à celles obtenues par la simple focalisation du faisceau laser.

On atteint au moins l'un des objectif précités avec un procédé d'usinage d'une cible par focalisation d'un faisceau laser femtoseconde au moyen d'un objectif de focalisation selon la technique dite d'ablation femtoseconde à seuil déterministe, ce procédé comprenant les étapes suivantes :
- on détermine un seuil d'ablation de la cible ;
- on réalise un filtrage spatial pupillaire du faisceau laser atteignant l'objectif de façon à réduire la taille de la tache centrale du faisceau laser dans le plan focal (selon la technique d'apodisation); ledit filtrage étant réalisé de façon à conserver une partie de l'intensité de la tache centrale au dessus dudit seuil d'ablation, et de façon à maintenir des lobes secondaires d'intensité du faisceau laser en dessous dudit seuil d'ablation.

Plus précisément, comme l'ablation par OCI présente un seuil stable très bien défini pour un matériau donné, il parait avantageux de lui associer l'apodisation, puisque d'après les caractéristiques précitées, elle permet des ablations plus petites, et que l'élévation des maxima secondaires n'a aucun effet indésirable pourvu que ces maxima restent en dessous du seuil d'ablation. La forte diminution de l'intensité focalisée est facilement compensée par l'emploi de lasers à impulsions à dérive de fréquence amplifiées ("chirp-pulse amplification lasers" en langue anglaise, ou CPA). En d'autres termes, la présente invention peut être considérée comme une association intelligente de deux techniques :
- l'Apodisation, un concept qui consiste en la modification de la figure de diffraction autour du foyer d'un objectif sous certaines contraintes par la conception de filtres d'amplitude et/ou de phase ; et
- l'Ablation femtoseconde à seuil déterministe, un concept par lequel l'ablation n'a lieu qu'au dessus d'un certain seuil de puissance très bien défini et reproductible pour les paramètres de l'expérience : l'énergie lumineuse en dehors du point focal n'a aucun effet, ni d'ablation ni de dommage. Or cette énergie périphérique est d'autant plus importante que le rétrécissement du point central dû à l'apodisation est fort.

L'ablation laser OCI selon la présente invention permet enfin de résoudre le problème des empreintes indésirables dues à la présence des lobes secondaires dans la tache de focalisation lors de la mise en oeuvre de l'apodisation. En effet, il suffit que ces lobes restent en dessous du seuil d'ablation pour qu'ils soient sans effet.

Le plus souvent, la cible est en matériau diélectrique. Mais elle peut également être en matériau métallique.

A titre d'exemple, on peut déterminer ledit seuil d'ablation en focalisant d'abord le faisceau laser sur une cible témoin, puis en ajustant la puissance du faisceau de manière à ce que seul le maximum central de la figure de diffraction focalisée génère une ablation.

Par laser femtoseconde, on entend un laser émettant des impulsions laser d'une durée sensiblement inférieur à 5 picosecondes.

Avec le procédé selon la présente invention, en gardant la hauteur des lobes secondaires en dessous du seuil d'ablation, et en réduisant la largeur du profil de l'intensité du faisceau laser, l'ablation se fait avec un point focal de taille inférieure à la limite imposée par la diffraction, ce qui, combiné à l'effet de seuil et au caractère non linéaire de l'ablation, permet d'usiner des motifs de taille encore plus réduite pour les nanotechnologies.

Avec le procédé selon l'invention, on peut usiner des motifs dont les dimensions sont comprises entre 19 et 29nm.

Selon une caractéristique avantageuse de l'invention, ledit filtrage pupillaire comprend un filtrage de phase, un filtrage d'amplitude ou une combinaison de filtrage de phase et d'amplitude. En d'autres termes, en mettant en oeuvre des altérations de phase, d'amplitude, ou une combinaison des deux.

A titre d'exemple, on peut réaliser le filtrage spatial pupillaire au moyen d'une plaque photographique ou d'un film photographique.

Avantageusement, on peut réaliser le filtrage spatial pupillaire au moyen d'un modulateur à cristaux liquides ou d'un miroir à optique adaptative. En effet l'emploi des miroirs à optique adaptative et des matrices de cristaux liquides permet de réaliser des filtres de grande précision.

Selon un mode de mise en oeuvre avantageux de l'invention, la topographie du filtre est de type binaire comportant notamment des anneaux sombres, clairs ou gris.

Autrement, la topographie du filtre peut être de type à variation continue.

Suivant un mode de réalisation de la présente invention, on réalise le filtrage en plaçant un filtre en amont de l'objectif de focalisation. On peut aussi réaliser ce filtrage en introduisant un filtre dans une optique de relais formant image dudit filtre sur le plan focal arrière de l'objectif de focalisation.

Suivant un autre aspect de l'invention, il est proposé un dispositif pour usiner une cible par focalisation d'un faisceau laser femtoseconde au moyen d'un objectif de focalisation selon la technique d'ablation femtoseconde à seuil déterministe. Selon l'invention, ce dispositif comprend des moyens de filtrage spatial pupillaire, disposés en amont dudit objectif de focalisation, pour réduire la taille de la tache centrale du faisceau laser dans le plan focal; ces moyens de filtrage étant dimensionnés de façon à conserver une partie de l'intensité de la tache centrale au dessus d'un seuil d'ablation déterminé, et de façon à maintenir des lobes secondaires d'intensité du faisceau laser en dessous dudit seuil d'ablation.

D'autres avantages et caractéristiques de l'invention apparaîtront à l'examen de la description détaillée d'un mode de mise en oeuvre nullement limitatif, et des dessins annexés, sur lesquels :
- La figure 1 est une image d'un exemple de décollement rétinien selon l'art antérieur ;
- La figure 2 est une image d'un autre exemple de décollement rétinien par laser pulsé selon l'art antérieur ;
- La figure 3 est une vue schématique simplifiée d'un mode de mise en oeuvre selon la présente invention ;
- La figure 4 est un graphe illustrant la courbe d'intensité du faisceau laser pulsé atteignant la cible selon la présente invention ;
- La figure 5 est une vue schématique du faisceau laser focalisé selon la présente invention ;
- La figure 6 est une vue d'un usinage en profondeur au moyen d'in procédé selon la présente invention.

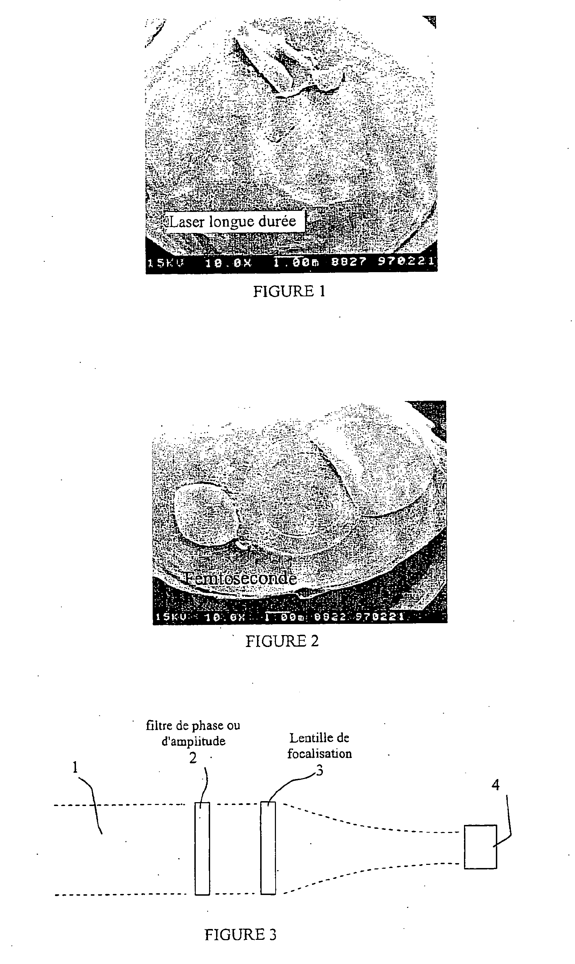

Sur la figure 1, on voit une ablation de mauvaise qualité réalisée au moyen d'un laser picoseconde selon l'art antérieur. Cette ablation requière par la suite une intervention manuelle pour finaliser la découpe. Toujours dans l'art antérieur, comme notamment décrit dans le document US5656186, on sait réaliser des ablations par laser femtoseconde. La figure 2 illustre une telle réalisation dans laquelle on a réalisé deux découpes lamellaires concentriques, parfaitement limitées par un contour précis et propre. La zone d'ablation avec un tel procédé est de l'ordre du millimètre. Dans l'art. antérieur, l'ablation est réalisée par faisceau laser à impulsions brèves (inférieures à 100 fs) focalisé par un objectif de microscope. La pupille d'entrée de cet objectif est dite "claire" parce qu'elle ne comporte aucune obstruction ni altération de la phase du front d'onde du faisceau incident. La répartition de l'intensité focalisée est alors celle du "disque d'Airy" qui concentre 48 % de l'énergie focalisée dans un cercle contenant les intensités supérieures ou égales à la moitié de l'intensité maximum et 84 % dans un cercle bordé par un anneau sombrer dû à la diffraction. Le restant étant contenu dans des anneaux brillants concentriques.

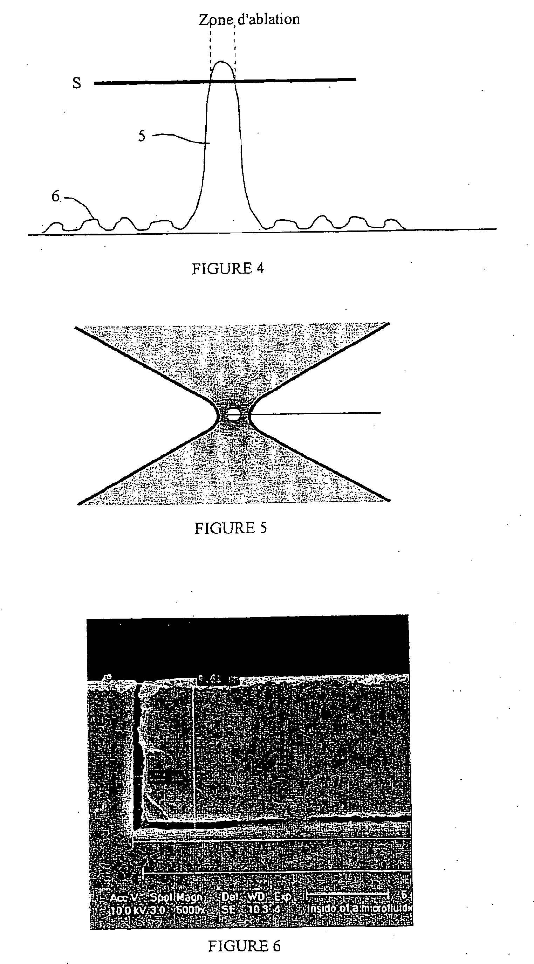

La figure 3 est un schéma illustrant un mode de mise en oeuvre de la présente invention. On distingue un faisceau laser 1 pulsé femtoseconde dirigé vers un filtre de phase 2, qui peut également être un filtre d'amplitude ou une combinaison de filtre de phase et d'amplitude. Le faisceau sortant du filtre 2 traverse un objectif 3 qui a pour fonction de focaliser le faisceau laser sur ou dans une cible 4 de matériau diélectrique. Sur la figure 4, on voit une courbe d'intensité du faisceau laser atteignant la cible. L'action du filtre 2 sur le faisceau laser constitue une étape d'apodisation permettant de rétrécir la dimension transverse du maximum central 5, c'est à dire que la distribution de l'intensité lumineuse au centre est plus étroite que celle que l'on obtiendrait sans un tel filtre. Pour compenser l'abaissement de luminosité à ce centre, on utilise un laser femtoseconde puissant et stable. La figure 5 est un schéma simplifié dans lequel on voit une représentation du plan de focalisation du faisceau laser pulsé. Avec une telle disposition, on réalise un usinage en profondeur de haute résolution comme représenté sur la figure 6. Les découpes sont précises, quasi linéaires, et présentent un diamètre d'environ 622 nm à une profondeur de 9.61 µm.

Un exemple de détermination de seuil d'ablation et de réglage de la puissance laser est le suivant :
- le seuil d'ablation est mesuré sur une cible témoin placée dans le plan focal de l'objectif comportant le filtre apodisant (ou son image optique) dans son plan focal arrière, et
- la puissance des impulsions laser femtoseconde est ajustée pour que l'ablation n'ait lieu que dans le point brillant.

A titre d'exemple, les caractéristiques d'un dispositif selon la présente invention peuvent être les suivantes : un filtre de phase comportant trois zones annulaires et introduisant un déphasage correspondant à une demi longueur d'onde de la composante centrale du spectre des impulsions laser. Ce filtre de phase rétrécit le maximum de la composante centrale dont le diamètre devient alors égal à 0.58 fois son homologue non filtré tandis que les anneaux brillants sont tous inférieurs ou égaux à une fraction de l'intensité maximum. Dans cet exemple, cette fraction est sensiblement égale à 0,8. Comme le seuil d'ablation est très précisément déterminé, l'usinage se produit uniquement autour du maximum central d'intensité avec une diminution du diamètre de l'ablation de près de 73 % sans que les anneaux brillants aient un effet sur cette ablation. Grâce à la réduction de la dimension transverse des nanogravures, l'augmentation en surface de la densité d'écriture -et donc de l'information - est ainsi multipliée par près d'un facteur trois.

Le filtre de phase utilisé est tel que les diamètres (rapportés au diamètre de la pupille de l'objectif) de l'anneau déphasant intérieur sont : 0,125, 0,215 ; de l'anneau intermédiaire sont : 0,379, 0.531 ; et de l'anneau extérieur sont : 0,746 et 1,0.

La présente invention peut donc s'appliquer dans les nanotechnologies, par exemple pour la conception de capteurs optiques ou d'une façon générale pour les télécommunications. Elle peut s'appliquer en particulier à la génération de nanocristalites par ablation laser femtoseconde. Ces nanoparticules possèdent des propriétés non linéaires exceptionnelles qui intéressent les nanotechnologies et les biosciences.

L'invention concerne également le domaine de l'apodisation, dans lequel on observe un nombre croissant de travaux en microscopie, particulièrement en microscopie multiphotonique, où justement l'importance de l'élévation des maxima secondaires est drastiquement réduite par les effets non linéaires de fluorescence par absorption à deux et trois photons, et par génération de seconde et troisième harmonique.

Bien sûr, l'invention n'est pas limitée aux exemples qui viennent d'être décrits et de nombreux aménagements peuvent être apportés à ces exemples sans sortir du cadre de l'invention.

## Revendications

1. Procédé d'usinage d'une cible par focalisation d'un faisceau laser femtoseconde au moyen d'un objectif de focalisation selon la technique dite d'ablation femtoseconde à seuil déterministe, **caracterisé par** les étapes suivantes :
- on détermine un seuil d'ablation de la cible ;
- on réalise un filtrage spatial pupillaire du faisceau laser atteignant l'objectif de façon à réduire la taille de la tache centrale du faisceau laser dans le plan focal, selon la technique d'apodisation; ledit filtrage étant réalisé de façon à conserver une partie de l'intensité de la tache centrale au dessus dudit seuil d'ablation, et de façon à maintenir des lobes secondaires d'intensité du faisceau laser en dessous dudit seuil d'ablation.

2. Procédé selon la revendication 1, **caractérisé en ce que** ledit filtrage pupillaire comprend un filtrage de phase.

3. Procédé selon la revendication 1 ou 2, **caractérisé en ce que** ledit filtrage pupillaire comprend un filtrage d'amplitude.

4. Procédé selon l'une quelconque des revendications, **caractérisé en ce qu'**on détermine ledit seuil d'ablation en focalisant d'abord le faisceau laser sur une cible témoin, puis en ajustant la puissance du faisceau de manière à ce que seul le maximum central de la figure de diffraction focalisée génère une ablation.

5. Procédé selon l'une quelconque des revendications précédentes, **caractérisé en ce que** ledit filtrage pupillaire comprend une combinaison de filtrage de phase et d'amplitude.

6. Procédé selon l'une quelconque des revendications précédentes, **caractérisé en ce qu'**on réalise le filtrage spatial pupillaire au moyen d'une plaque photographique.

7. Procédé selon l'une quelconque des revendications 1 à 5, **caractérisé en ce qu'**on réalise le filtrage spatial pupillaire au moyen d'un film photographique.

8. Procédé selon l'une quelconque des revendications 1 à 5, **caractérisé en ce qu'**on réalise le filtrage spatial pupillaire au moyen d'un modulateur à cristaux liquides.

9. Procédé selon l'une quelconque des revendications 1 à 5, **caractérisé en ce qu'**on réalise le filtrage spatial pupillaire au moyen d'un miroir à optique adaptative.

10. Procédé selon l'une quelconque des revendications précédentes, **caractérisé en ce que** la topographie du filtre est de type binaire.

11. Procédé selon l'une quelconque des revendications 1 à 9, **caractérisé en ce que** la topographie du filtre est de type à variation continue.

12. Procédé selon l'une quelconque des revendications précédentes, **caractérisé en ce qu'**on réalise le filtrage en plaçant un filtre en amont dudit objectif de focalisation.

13. Procédé selon l'une quelconque des revendications 1 à 11, **caractérisé en ce qu'**on réalise le filtrage en introduisant un filtre dans une optique de relais formant image dudit filtre sur le plan focal arrière de l'objectif de focalisation.

14. Procédé selon l'une quelconque des revendications précédentes, **caractérisé en ce qu'**on génère le faisceau laser à partir d'un laser à impulsions à dérive de fréquente amplifiées.

15. Procédé selon l'une quelconque des revendications précédentes, **caractérisé en ce que** la cible est en matériau diélectrique ou métallique.

16. Dispositif pour usiner une cible par focalisation d'un faisceau laser femtoseconde au moyen d'un objectif de focalisation selon la technique dite d'ablation femtoseconde à seuil déterministe, ce dispositif étant **caractérisé par** des moyens de filtrage spatial pupillaire, disposés en amont dudit objectif de focalisation, pour réduire la taille de la tache centrale du faisceau laser dans le plan focal; ces moyens de filtrage étant dimensionnés de façon à conserver une partie de l'intensité de la tache centrale au dessus d'un seuil d'ablation déterminé, et de façon à maintenir des lobes secondaires d'intensité du faisceau laser en dessous dudit seuil d'abtation, selon la technique d'apodisation.

17. Dispositif selon la revendication 16, **caractérisé en ce que** les moyens de filtrage comprennent un filtre de phase.

18. Dispositif selon la revendication 16 ou 17, **caractérisé en ce que** les moyens de filtrage comprennent un filtre d'amplitude.

19. Dispositif selon la revendication 16, **caractérisé en ce que** les moyens de filtrage comprennent une combinaison de filtre de phase et de filtre d'amplitude.

## Claims

1. Method for machining a target by focusing a femtosecond laser beam using a focusing lens according to the technique known as deterministic threshold femtosecond ablation, **characterized by** the following steps:
- an ablation threshold of the target is determined;
- pupil spatial filtering of the laser beam reaching the lens is carried out in order to reduce the size of the central spot in the focal plane according to the technique of apodization; said filtering being carried out so as to retain a part of the intensity of the central spot above said ablation threshold, and so as to maintain the side lobe intensity of the laser beam below said ablation threshold.

2. Method according to claim 1, **characterized in that** said pupil filtering comprises a phase filtering.

3. Method according to claim 1 or 2, **characterized in that** said pupil filtering comprises an amplitude filtering.

4. Method according to any one of the claims, **characterized in that** said ablation threshold is determined by firstly focusing the laser beam on a test target, then by adjusting the power of the beam so that only the central maximum of the focused diffraction pattern generates an ablation.

5. Method according to any one of the previous claims, **characterized in that** said pupil filtering comprises a combination of phase and amplitude filtering.

6. Method according to any one of the previous claims, **characterized in that** the pupil spatial filtering is carried out using a photographic plate.

7. Method according to any one of claims 1 to 5, **characterized in that** the pupil spatial filtering is carried out using a photographic film.

8. Method according to any one of claims 1 to 5, **characterized in that** the pupil spatial filtering is carried out using a liquid crystal modulator.

9. Method according to any one of claims 1 to 5, **characterized in that** the pupil spatial filtering is carried out using an adaptive-optics mirror.

10. Method according to any one of the previous claims, **characterized in that** the topography of the filter is of binary type.

11. Method according to any one of claims 1 to 9, **characterized in that** the topography of the filter is of continuous-variation type.

12. Method according to any one of the previous claims, **characterized in that** the filtering is carried out by placing a filter upstream of said focusing lens.

13. Method according to any one of claims 1 to 11, **characterized in that** the filtering is carried out by introducing a filter into a relay optical system forming an image of said filter on the rear focal plane of the focusing lens.

14. Method according to any one of the previous claims, **characterized in that** the laser beam is generated from a chirped-pulse amplification laser.

15. Method according to any one of the previous claims, **characterized in that** the target is made of dielectric or metal material.

16. Device for machining a target by focusing a femtosecond laser beam using a focusing lens according to the technique called deterministic threshold femtosecond ablation, this device being **characterized by** means of pupil spatial filtering, arranged upstream of said focusing lens, in order to reduce the size of the central spot of the laser beam in the focal plane; these filtering means being dimensioned so as to retain a part of the intensity of the central spot above a determined ablation threshold, and so as to keep the intensity of the side lobes of the laser beam below said ablation threshold, according to the technique of apodization.

17. Device according to claim 16, **characterized in that** the filtering means comprise a phase filter.

18. Device according to claim 16 or 17, **characterized in that** the filtering means comprise an amplitude filter.

19. Device according to claim 16, **characterized in that** the filtering means comprise a combination of phase and amplitude filters.

## Patentansprüche

1. Verfahren zur Bearbeitung eines Targets durch Fokussierung eines Femtosekunden-Laserstrahls mittels eines Fokussierobjektivs nach der sogenannten Femtosekunden-Ablationstechnik mit deterministischer Schwelle, **gekennzeichnet durch** die folgenden Schritte:
- Festlegen einer Ablationsschwelle des Targets,
- Durchführen einer räumlichen Pupillenfilterung des das Objektiv erreichenden Laserstrahls zur Reduzierung der Größe des zentralen Flecks des Laserstrahls in der Fokalebene, entsprechend der Apodisationstechnik, wobei die Filterung derart durchgeführt wird, dass ein Teil der Intensität des zentralen Flecks oberhalb der Ablationsschwelle erhalten bleibt und dass Intensitäts-Sidelobes des Laserstrahls unterhalb der Ablationsschwelle aufrechterhalten werden.

2. Verfahren nach Anspruch 1, **dadurch gekennzeichnet, dass** die Pupillenfilterung eine Phasenfilterung umfasst.

3. Verfahren nach Anspruch 1 oder 2, **dadurch gekennzeichnet, dass** die Pupillenfilterung eine Amplitudenfilterung umfasst.

4. Verfahren nach einem der vorhergehenden Ansprüche, **dadurch gekennzeichnet, dass** die Ablationsschwelle dadurch festgelegt wird, dass zunächst der Laserstrahl auf ein Kontrolltarget fokussiert wird, dass anschließend die Leistung des Strahls derart eingestellt wird, dass lediglich das mittlere Maximum des fokussierten Beugungsmusters eine Ablation erzeugt.

5. Verfahren nach einem der vorhergehenden Ansprüche, **dadurch gekennzeichnet, dass** die Pupillenfilterung eine Kombination aus Phasen- und Amplitudenfilterung umfasst.

6. Verfahren nach einem der vorhergehenden Ansprüche, **dadurch gekennzeichnet, dass** die räumliche Pupillenfilterung mit Hilfe einer Fotoplatte durchgeführt wird.

7. Verfahren nach einem der Ansprüche 1 bis 5, **dadurch gekennzeichnet, dass** die räumliche Pupillenfilterung mit Hilfe eines fotografischen Films durchgeführt wird.

8. Verfahren nach einem der Ansprüche 1 bis 5, **dadurch gekennzeichnet, dass** die räumliche Pupillenfilterung mit Hilfe eines Flüssigkristallmodulators durchgeführt wird.

9. Verfahren nach einem der Ansprüche 1 bis 5, **dadurch gekennzeichnet, dass** die räumliche Pupillenfilterung mit Hilfe eines verformbaren Spiegels für adaptive Optik durchgeführt wird.

10. Verfahren nach einem der vorhergehenden Ansprüche, **dadurch gekennzeichnet, dass** die Topographie des Filters vom binären Typ ist.

11. Verfahren nach einem der Ansprüche 1 bis 9, **dadurch gekennzeichnet, dass** die Topographie des Filters vom Typ mit kontinuierlicher Änderung ist.

12. Verfahren nach einem der vorhergehenden Ansprüche, **dadurch gekennzeichnet, dass** die Filterung durchgeführt wird, indem ein Filter dem Fokussierobjektiv vorgeschaltet wird.

13. Verfahren nach einem der Ansprüche 1 bis 11, **dadurch gekennzeichnet, dass** die Filterung durchgeführt wird, indem ein Filter in eine Relaisoptik eingesetzt wird, die ein Bild des Filters auf der hinteren Fokalebene des Fokussierobjektivs bildet.

14. Verfahren nach einem der vorhergehenden Ansprüche, **dadurch gekennzeichnet, dass** der Laserstrahl mittels eines Chirped Pulse Amplification Lasers erzeugt wird.

15. Verfahren nach einem der vorhergehenden Ansprüche, **dadurch gekennzeichnet, dass** das Target aus einem dielektrischen oder metallischen Material besteht.

16. Vorrichtung zur Bearbeitung eines Targets durch Fokussierung eines Femtosekunden-Laserstrahls mittels eines Fokussierobjektivs nach der sogenannten Femtosekunden-Ablationstechnik mit deterministischer Schwelle, wobei diese Vorrichtung **gekennzeichnet ist durch** Mittel zur räumlichen Pupillenfilterung, die dem Fokussierobjektiv vorgeschaltet sind, um die Größe des zentralen Flecks des Laserstrahls in der Fokalebene zu reduzieren, wobei diese Filtermittel derart bemessen sind, dass ein Teil der Intensität des zentralen Flecks oberhalb einer bestimmten Ablationsschwelle erhalten bleibt und dass Intensitäts-Sidelobes des Laserstrahls unterhalb der Ablationsschwelle aufrechterhalten werden, entsprechend der Apodisationstechnik.

17. Vorrichtung nach Anspruch 16, **dadurch gekennzeichnet, dass** die Filtermittel ein Phasenfilter umfassen.

18. Vorrichtung nach Anspruch 16 oder 17, **dadurch gekennzeichnet, dass** die Filtermittel ein Amplitudenfilter umfassen.

19. Vorrichtung nach Anspruch 16, **dadurch gekennzeichnet, dass** die Filtermittel eine Kombination aus Phasenfilter und Amplitudenfilter umfassen.
